# EUROPÄISCHE PATENTSCHRIFT

(11) **EP 2 882 556 B1**
(45) Veröffentlichungstag und Bekanntmachung des Hinweises auf die Patenterteilung: **25.12.2019**
(21) Anmeldenummer: 13748014.1
(22) Anmeldetag: 07.08.2013
(51) Int. Cl.: B23C 5/26, F16D 1/08

(54) **WERKZEUGANORDNUNG MIT ZENTRIERVORRICHTUNG**
TOOL ASSEMBLY WITH CENTERING DEVICE
AGENCEMENT D'OUTIL AVEC DISPOSITIF DE CENTRAGE

(30) Priorität: 09.08.2012 DE 102012107331; 22.05.2013 DE 102013105206
(43) Veröffentlichungstag der Anmeldung: 17.06.2015
(73) Patentinhaber: Franz Haimer Maschinenbau KG, 86568 Hollenbach-Igenhausen (DE)
(72) Erfinder: HAIMER, Franz, Igenhausen 86568 (DE)
(74) Vertreter: Charrier Rapp & Liebau
(86) Internationale Anmeldenummer: PCT/EP2013/066573
(87) Internationale Veröffentlichungsnummer: WO 2014/023778

(56) Entgegenhaltungen:
- EP-A1- 0 208 786
- EP-A2- 0 426 097
- WO-A1-94/11143
- WO-A2-2009/140109
- DD-A1- 50 166
- DE-A1- 2 555 613
- DE-A1- 19 753 781
- DE-A1- 19 961 451
- DE-A1-102007 032 655
- US-A- 1 797 296
- US-A- 2 612 376
- US-A- 3 112 116
- US-A1- 2002 081 164
- US-A1- 2008 185 792

## Beschreibung

Die Erfindung betrifft eine Werkzeuganordnung nach dem Oberbegriff des Patentanspruchs 1. Eine derartige Werkzeuganordnung ist aus der US 2008/0185792 A1 bekannt. Im Maschinenbau werden oftmals Bearbeitungsmaschinen eingesetzt, die ein Rotationswerkzeug mittels einer Innenspanneinrichtung spannen. Das Rotationswerkzeug weist hierbei eine zylindrische Bohrung auf, die mit einem Spanndorn an einer Werkzeugaufnahme der Bearbeitungsmaschine korrespondiert. Zur Verbindung wird das Rotationswerkzeug auf den Spanndorn aufgesteckt und zumeist von der Stirnseite der Werkzeugaufnahme mittels einer Schraubverbindung gesichert. Um die Bohrung auf den Spanndorn aufstecken zu können, sind Toleranzen in der Passung erforderlich. Aufgrund dieser Passungen ist eine zentrische Spannung des Rotationswerkzeugs auf dem Spanndorn jedoch nicht mit ausreichender Genauigkeit möglich, was zu Fertigungsfehlern bzw. einem erhöhten Verschleiß an dem Rotationswerkzeug führt.

Aus dem Stand der Technik sind verschiedene Lösungen für dieses Problem bekannt. So zeigt die WO 2005/063426 A1 eine Innenspanneinrichtung mit einem Spanndorn zur Zentrierung eines Rotationswerkzeugs mit einer Bohrung. Der Spanndorn weist eine Segmentspanneinrichtung mit mehreren radial nach außen hervorstehenden gestaltfesten Spannsegmenten auf. Die Spannsegmente stützen sich auf einer konischen Fläche ab, so dass eine Bewegung der Spannsegmente in Längsrichtung des Spanndorns eine radiale Bewegung der Spannsegmente in Richtung des Rotationswerkzeugs bewirkt. Somit können die Spannsegmente an die Bohrung angestellt werden, wodurch die Toleranz in der Passung zwischen dem Spanndorn und der Bohrung des Rotationswerkzeugs überwunden und eine gute zentrische Spannung erreicht wird. Um die Spannsegmente zusammenzuhalten und ein Lösen der Segmentspanneinrichtung zu unterstützen, sind die Spannsegmente durch Gummielemente elastisch verbunden.

Aus der FR 2 297 107 A1 ist ebenfalls eine Innenspanneinrichtung für ein Rotationswerkzeug bekannt. Wie auch schon bei der WO 2005/063426 A1 gezeigt, ist die Innenspanneinrichtung als Segmentspanneinrichtung mit mehreren radial nach außen hervorstehenden Spannsegmenten zur Zentrierung des Rotationswerkzeugs ausgebildet. Im Unterschied zu dem Gegenstand der WO 2005/063426 A1 ist zur Sicherung der Spannsegmente ein umlaufender Gummiring vorgesehen.

Aus der WO 2009/140109 A2 ist eine Werkzeuganordnung bekannt, die eine Werkzeugaufnahme mit einem Spanndorn, ein auf die Werkzeugaufnahme aufgesetztes Rotationswerkzeug mit einer Aufnahmebohrung und einen zwischen dem Spanndorn und dem Rotationswerkzeug eingesetzten geschlossenen Zentrierring mit einer elastisch verformbaren Kontur umfasst.

Aufgabe der Erfindung ist es, eine Werkzeuganordnung mit einer universellen, einfach zu fertigenden und für eine Vielzahl von Innenspanneinrichtungen verwendbaren Zentriervorrichtung zu schaffen, die eine hochpräzise Zentrierung des Rotationswerkzeugs an der Innenspanneinrichtung ermöglicht.

Diese Aufgabe wird durch eine Werkzeuganordnung mit den Merkmalen des Anspruchs 1 gelöst. Vorteilhafte Ausgestaltungen der Erfindung sind in den Unteransprüchen angegeben.

Bei der erfindungsgemäßen Werkzeuganordnung ist die Zentriervorrichtung als geschlossener Zentrierring ausgebildet, der zwischen einem Rotationswerkzeug und einem Spanndorn einsetzbar ist und eine elastisch verformbare Kontur aufweist. Der im Querschnitt kreisrund ausgebildete Zentrierring weist mindestens einen radial nach außen vorstehenden, elastisch beweglichen äußeren Zentrierbereich auf. Hierdurch werden zum einen ein einfacher Aufbau und damit eine günstige Fertigung und zum anderen eine hochpräzise Zentrierung ermöglicht. Bei einer Befestigung eines Rotationswerkzeugs auf dem Spanndorn der Werkzeugaufnahme wird der Zentrierring dazwischen angeordnet und verspannt sich aufgrund einer elastischen Verformung. Durch die Ausbildung der Zentriervorrichtung als geschlossener Ring wird sichergestellt, dass sich die Spannung aus der elastischen Verformung gleichmäßig verteilt und somit die präzise Zentrierung erreicht wird.

In einer zweckmäßigen Ausführungsform weist der Zentrierring nach innen hervorstehende, elastisch verformbare innere Zentrierbereiche auf. Die äußeren Zentrierbereiche und die inneren Zentrierbereiche sind zweckmäßig in Umfangsrichtung versetzt an dem Zentrierring angeordnet. Durch diese zusätzlichen elastischen inneren Zentrierbereiche kann die Genauigkeit der Zentrierung der Einspannung des Rotationswerkzeugs auf dem Spanndorn weiter erhöht werden.

Der Zentrierring kann in einer alternativen Ausführungsform auch zylindrisch mit einem in Umfangsrichtung umlaufenden radial nach außen gekrümmten Ringwulst ausgebildet sein. Die umlaufende Ringwulst ist in radialer Richtung elastisch und bildet den äußeren Zentrierbereich. Vorteilhaft an einer solchen Ausführung des Zentrierrings ist zudem, dass er in Längsrichtung dichtend wirkt und somit zur Abdichtung gegenüber Kühl- bzw. Schmiermittel verwendet werden kann.

In einer weiteren alternativen Ausführungsform weist der Zentrierring im Querschnitt eine konkave bzw. konvexe Wandung auf. Der Zentrierring kann zudem zweckmäßig in Umfangsrichtung verteilte Längsschlitze enthalten, die eine Anpassung der Elastizität des Zentrierrings ermöglichen.

Weiter Besonderheiten und Vorzüge der Erfindung ergeben sich aus der folgenden Beschreibung bevorzugter Ausführungsbeispiele anhand der Zeichnung. Es zeigen:
- **Figur 1**: einen Längsschnitt durch den vorderen Teil einer erfindungsgemäßen Werkzeuganordnung mit einer Werkzeugaufnahme, einem Rotationswerkzeug und einer Zentriervorrichtung;
- **Figur 2**: einen Längsschnitt durch die Zentriervorrichtung aus Figur 1;
- **Figur 3**: eine perspektivische Ansicht einer weiteren Ausführungsform der Zentriervorrichtung;
- **Figur 4**: eine alternative Ausführungsform der Zentriervorrichtung aus Figur 3;
- **Figur 5**: eine Vorderansicht einer Zentriervorrichtung einer nicht erfindungsgemäßen Werkzeuganordnung;
- **Figur 6**: eine perspektivische Ansicht der Zentriervorrichtung aus Figur 5 und
- **Figur 7**: einen Längsschnitt durch eine weitere Ausführungsform der Zentriervorrichtung.

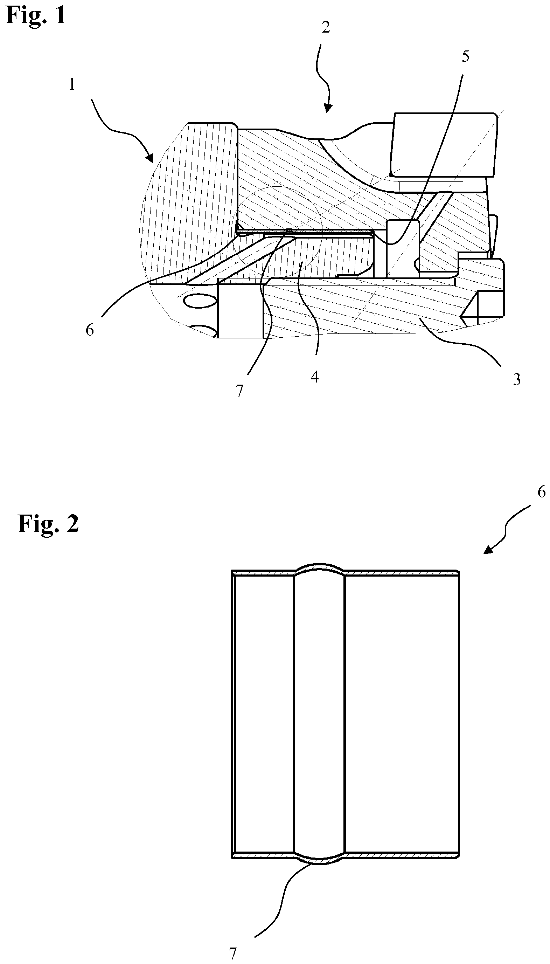

In Figur 1 ist der vordere Teil einer erfindungsgemäßen Werkzeuganordnung mit einer Werkzeugaufnahme 1 gezeigt, auf der ein hier als Fräser ausgebildetes Rotationswerkzeug 2 mittels einer Feststellschraube 3 befestigt ist. Die Werkzeugaufnahme 1 weist einen zylindrischen Spanndorn 4 auf, auf den das Rotationswerkzeug 2 mit einer dazu korrespondierenden Aufnahmebohrung 5 aufgesteckt wird. Um das Rotationswerkzeug 2 über die gesamte Länge des Spanndorns 4 aufschieben zu können, muss der Spanndorn 4 gegenüber der Aufnahmebohrung 5 eine entsprechende Toleranz aufweisen, was sich jedoch nachteilig auf die Zentrierung des Rotationswerkzeugs 2 auf der Werkzeugaufnahme 1 auswirkt. Um dies zu vermeiden, ist eine Zentriervorrichtung vorgesehen, die als Zentrierring 6 ausgebildet ist und zwischen dem Spanndorn 4 und der Aufnahmebohrung 5 des Rotationswerkzeugs 2 angeordnet ist.

In Figur 2 ist der Zentrierring 6 der Figur 1 einzeln dargestellt. Dieser besteht aus einem zylindrischen Rohr, das eine nach außen vorstehende, gekrümmte Ringwulst 7 aufweist und aus einem elastischen Material, wie beispielsweise einem Metall oder einem Kunststoff, besteht. Bei einem Druck von außen auf die Ringwulst 7 bewegt sich diese elastisch radial nach innen.

Bei einer Montage des Rotationswerkzeugs 2 auf die Werkzeugaufnahme 1 wird der Zentrierring 6 zweckmäßig zuerst auf den Spanndorn 4 der Werkzeugaufnahme 1 und dann das Rotationswerkzeug 2 auf den Zentrierring 6 aufgesteckt. Es ist jedoch auch möglich, den Zentrierring 6 zuerst mit dem Rotationswerkzeug 2 zu verbinden. Der Ringwulst 7 weist gegenüber der Aufnahmebohrung 5 des Rotationswerkzeugs 2 ein geringfügiges Übermaß auf, so dass sich beim Aufschieben des Rotationswerkzeugs 2 der Ringwulst 7 geringfügig elastisch radial nach innen verformt bzw. bewegt und damit das Rotationswerkzeug 2 zentrisch gegen den Spanndorn 4 verspannt. Hierdurch wird eine präzise Zentrierung des Rotationswerkzeugs 2 auf der Werkzeugaufnahme 1 ermöglicht.

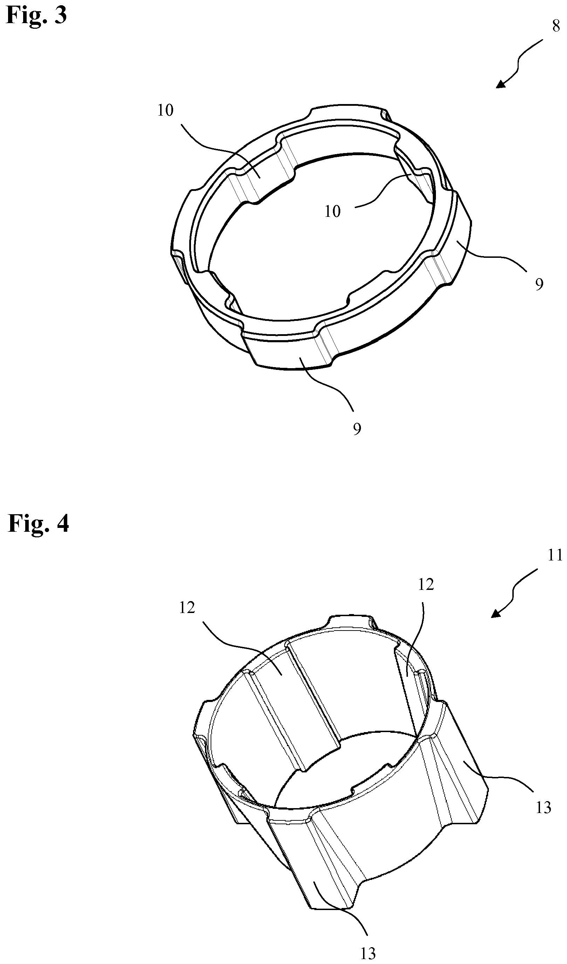

In Figur 3 ist eine alternative Ausführungsform des Zentrierrings 6 aus Figur 2 gezeigt. Wie in der Ausführungsform der Figuren 1 und 2 ist der in Figur 3 gezeigte Zentrierring 8 im Wesentlichen zylindrisch ausgebildet. Im Gegensatz zu dem Ausführungsbeispiel der Figuren 1 und 2 weist der Zentrierring 8 radial nach außen hervorstehende äußere Zentrierbereiche 9 und radial nach innen hervorstehende innere Zentrierbereiche 10 auf, die in Umfangsrichtung des Zentrierrings 8 zueinander gleichmäßig versetzt angeordnet sind.

Alternativ zu dem Zentrierring 6 kann der Zentrierring 8 zwischen dem in Figur 1 gezeigten Spanndorn 4 und dem Rotationswerkzeug 2 angeordnet werden, wobei die äußeren Zentrierbereiche 9 an der Aufnahmebohrung 5 des Rotationswerkzeugs 2 und die inneren Zentrierbereiche 10 an dem Spanndorn 4 anliegen. Der Zentrierring 8 ist so dimensioniert, dass die äußeren Zentrierbereiche 9 ein geringfügiges Übermaß gegenüber der Aufnahmebohrung 5 des Rotationswerkzeugs 2 und/oder die inneren Zentrierbereiche 10 ein geringfügiges Untermaß gegenüber dem Außendurchmesser des Spanndorns 4 haben. In montiertem Zustand verformen sich die Zentrierbereiche 9 und 10 folglich elastisch in radialer Richtung, wodurch das Rotationswerkzeug 2 gegenüber dem Spanndorn 4 verspannt und zentriert wird.

In Figur 4 ist eine alternative Ausführungsform zu dem Zentrierring 8 aus Figur 3 gezeigt. Ebenso wie bei dem Ausführungsbeispiel der Figur 3 sind an dem in Figur 4 gezeigten Zentrierring 11 in Umfangsrichtung zueinander versetzt jeweils radial nach innen hervorstehende innere Zentrierbereiche 12 und radial nach außen hervorstehende äußere Zentrierbereiche 13 angeordnet. Im Gegensatz zu dem Zentrierring 8 in Figur 3 sind der Zentrierring 1 und die inneren Zentrierbereiche 12 konisch ausgebildet. Durch diese konischen inneren Zentrierbereiche 12 wird eine zusätzliche Zentrierung des Zentrierrings 11 auf dem Spanndorn 4 erreicht. Es ist jedoch auch möglich die äußeren Zentrierbereiche 13 und/oder beide Zentrierbereiche 12 und 13 konisch auszuführen, um die Zentrierwirkung weiter zu steigern.

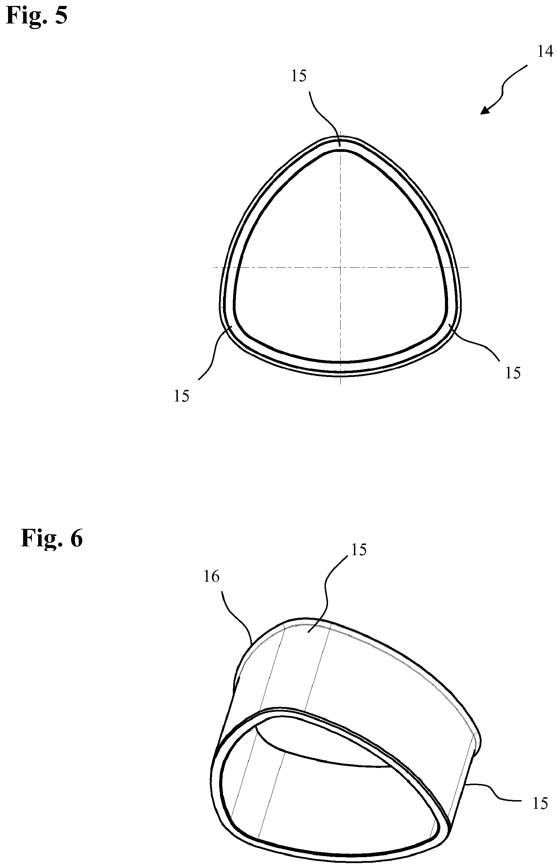

In Figur 5 ist ein Zentrierring 14 einer nicht erfindungsgemäßen Ausführungsform der Werkzeuganordnung in der Vorderansicht dargestellt. Der Zentrierring 14 ist im Querschnitt als Polygon mit drei gleichmäßig in Umfangsrichtung verteilten verrundeten Ecken 15 ausgebildet und besteht vorzugsweise aus einem elastischen Kunststoff oder Metall. Der Zentrierring 14 kann beispielsweise durch plastisches Umformen eines zylindrischen Rohteils einfach und kostengünstig hergestellt werden.

Der Zentrierring 14 ist so dimensioniert, dass der größte äußere Durchmesser der nach außen hervorstehenden, als Ecken 15 ausgebildeten äußeren Zentrierbereiche ein geringfügiges Übermaß gegenüber der Aufnahmebohrung 5 des in Figur 1 gezeigten zu zentrierenden Rotationswerkzeugs 2 hat. Die kleinsten Innendurchmesser des Zentrierrings 14, die jeweils zwischen zwei Ecken 15 angeordnet sind und welche die inneren Zentrierbereiche bilden, sind zudem geringfügig kleiner als der Außendurchmesser des Spanndorns 4 aus der Figur 1. Wird der Zentrierring 14 anstelle des Zentrierrings 6 zwischen dem Rotationswerkzeug 2 und dem Spanndorn 4 in Figur 1 angeordnet, verformen sich die Ecken 15 aufgrund der Quetschung durch die Aufnahmebohrung 5 radial und elastisch nach innen sowie die inneren Zentrierbereiche bei den kleinsten Innendurchmessern des Zentrierrings 14 nach außen. Durch diese elastische Verformung des Zentrierrings 14 wird das Rotationswerkzeug 2 gegenüber dem Spanndorn 4 verspannt und zentriert.

Wie der perspektivischen Ansicht des Zentrierrings 14 in Figur 6 zu entnehmen ist, weist der Zentrierring 14 an einem Ende einen umlaufenden, radial nach außen abstehenden Bund 16 auf. Der Bund 16 dient zur positionsgenauen Anlage des Zentrierrings 14 an dem Rotationswerkzeug 2, so dass die Montage des Zentrierrings 14 an dem Rotationswerkzeug 2 einfach und präzise erfolgen kann. Aufgrund der Verspannung durch die Quetschung des Zentrierrings 14 in dem Rotationswerkzeug 2 ist dieser zudem sicher reibschlüssig in dem Rotationswerkzeug 2 gehalten, wodurch sich die weitere Montage vereinfacht. An dem Rotationswerkzeug 2 in Figur 1 kann zudem an der Aufnahmebohrung 5 eine Fase angeordnet sein, die zu dem umlaufenden Bund 16 korrespondiert und diesen ganz aufnimmt, so dass die Montage des Rotationswerkzeugs 2 mit dem Zentrierring 14 an dem Spanndorn 4 der in Figur 1 gezeigten Werkzeugaufnahme 1 nicht durch überstehende Teile behindert wird.

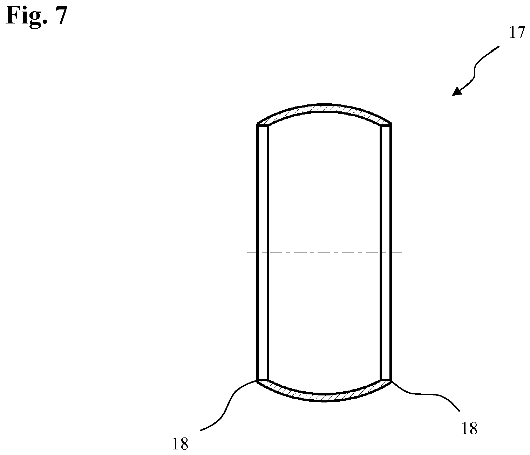

In einer weiteren erfindungsgemäßen Ausführungsform der Werkzeuganordnung kann auch ein in Figur 7 gezeigter Zentrierring 17 vorgesehen sein. Der Zentrierring 17 weist im Querschnitt eine konvexe Wandung auf, wobei die Enden 18 des Zentrierrings 17 radial nach innen vorstehen und die inneren Zentrierbereiche bilden. Zwischen den Enden 18 des bauchig ausgebildeten Zentrierrings 18 ist der größte Durchmesser und damit der äußere Zentrierbereich des Zentrierrings 17 angeordnet. Analog zu den vorherigen Ausführungsformen des Zentrierrings ist der Zentrierring 17 so dimensioniert, dass der Innendurchmesser der Enden 18 geringfügig kleiner ist, als der Außendurchmesser des in Figur 1 gezeigten Spanndorns 4 und der Außendurchmesser des bauchigen äußeren Zentrierbereichs ein Übermaß gegenüber der Aufnahmebohrung 5 des Rotationswerkzeugs 2 aufweist.

Bei einer Montage des Zentrierrings 17 anstelle des Zentrierrings 6 zwischen dem Rotationswerkzeug 2 und dem Spanndorn 4 der in der Figur 1 gezeigten Werkzeugaufnahme 1 wird der Zentrierring 17 gequetscht und die Enden 18 radial nach außen sowie der bauchige äußere Zentrierbereich radial nach innen elastisch verformt. Durch diese Verspannung mittels des Zentrierrings 17wird das Rotationswerkzeug 2 gegenüber dem Spanndorn 4 verspannt und zentriert.

Der Zentrierring 17 kann zudem nicht dargestellte Schlitze in Längsrichtung aufweisen. Diese Schlitze ermöglichen es, die Elastizität des Zentrierrings 17 zu verändern und somit den Zentrierring 17 an die verschiedenen Anforderungen bezüglich der Zentrierwirkung, der Montagekraft und dergleichen anzupassen. Der Zentrierring 17 kann aber auch konkav ausgebildet sein.

Der in der Figur 6 bezüglich des Zentrierrings gezeigte umlaufende Bund 16 kann auch an den weiteren gezeigten Ausführungsformen des Zentrierrings angeordnet sein und erfüllt dort ebenso die Funktion einer Positionierung des Zentrierrings gegenüber dem Rotationswerkzeug oder gegenüber der Werkzeugaufnahme.

## Patentansprüche

1. Werkzeuganordnung umfassend eine Werkzeugaufnahme (1) mit einem Spanndorn (4), ein auf die Werkzeugaufnahme (1) aufgesetztes Rotationswerkzeug (2) mit einer Aufnahmebohrung (5) und einen zwischen dem Spanndorn (4) und dem Rotationswerkzeug (2) eingesetzten geschlossenen Zentrierring (6; 8; 11; 17) mit einer elastisch verformbaren Kontur, wobei der Zentrierring (6; 8; 11; 17) im Querschnitt kreisrund ausgebildet ist und mindestens einen radial nach außen vorstehenden, elastisch beweglichen äußeren Zentrierbereich (7; 9; 13) aufweist, **dadurch gekennzeichnet, dass** der äußere Zentrierbereich (7; 9; 13) ein gegenüber der Aufhahmebohrung (5) geringfügiges Übermaß aufweist und sich dadurch beim Aufschieben des Rotationswerkzeugs elastisch radial nach innen verformt.

2. Werkzeuganordnung nach Anspruch 1, **dadurch gekennzeichnet, dass** der Zentrierring (6; 8; 11; 17) mindestens einen radial nach innen vorstehenden, elastisch beweglichen inneren Zentrierbereich (10; 12) aufweist.

3. Werkzeuganordnung nach Anspruch 1 oder 2, **dadurch gekennzeichnet, dass** der Zentrierring (6; 8; 11; 17) äußere Zentrierbereiche (9; 13) und dazu in Umfangsrichtung versetzte innere Zentrierbereiche (10; 12) enthält.

4. Werkzeuganordnung nach einem der Ansprüche 1 bis 3, **dadurch gekennzeichnet, dass** der Zentrierring (6; 8; 11; 17) eine weitestgehend konstante Wandstärke aufweist.

5. Werkzeuganordnung nach einem der Ansprüche 1 bis 4, **dadurch gekennzeichnet, dass** der Zentrierring (6) zylindrisch ausgebildet ist und der äußere Zentrierbereich durch einen radial nach außen gekrümmten Ringwulst (7) gebildet wird.

6. Werkzeuganordnung nach Anspruch 1, **dadurch gekennzeichnet, dass** der Zentrierring (17) im Querschnitt eine konkave bzw. konvexe Wandung aufweist.

7. Werkzeuganordnung nach Anspruch 6, **dadurch gekennzeichnet, dass** der Zentrierring (17) in Umfangsrichtung verteilte Längsschlitze aufweist.

8. Werkzeuganordnung nach einem der vorhergehenden Ansprüche, **dadurch gekennzeichnet, dass** der Zentrierring (6; 8; 11; 17) an einem Ende einen ringförmigen Bund (16) zur Anlage an dem Rotationswerkzeug (2) aufweist.

## Claims

1. Tool arrangement comprising a tool receptacle (1) with a clamping mandrel (4), a rotary tool (2), placed on the tool receptacle (1), with a receiving bore (5) and a closed centring ring (6; 8; 11; 17) that is inserted between the clamping mandrel (4) and the rotary tool (2) and has an elastically deformable contour, wherein the centring ring (6; 8; 11; 17) is formed in a circular manner in cross section and has at least one radially outwardly protruding, elastically movable outer centring region (7; 9; 13), **characterized in that** the outer centring region (7; 9; 13) has a slight oversize compared with the receiving bore (5) and as a result deforms elastically radially inwardly when the rotary tool is fitted.

2. Tool arrangement according to Claim 1, **characterized in that** the centring ring (6; 8; 11; 17) has at least one radially inwardly protruding, elastically movable inner centring region (10; 12).

3. Tool arrangement according to Claim 1 or 2, **characterized in that** the centring ring (6; 8; 11; 17) includes outer centring regions (9; 13) and inner centring regions (10; 12) that are offset therefrom in the circumferential direction.

4. Tool arrangement according to one of Claims 1 to 3, **characterized in that** the centring ring (6; 8; 11; 17) has a wall thickness that is mostly constant.

5. Tool arrangement according to one of Claims 1 to 4, **characterized in that** the centring ring (6) is formed in a cylindrical manner and the outer centring region is formed by a radially outwardly curved annular bead (7).

6. Tool arrangement according to Claim 1, **characterized in that** the centring ring (17) has a concave or convex wall in cross section.

7. Tool arrangement according to Claim 6, **characterized in that** the centring ring (17) has longitudinal slots distributed in the circumferential direction.

8. Tool arrangement according to one of the preceding claims, **characterized in that** the centring ring (6; 8; 11; 17) has, at one end, an annular flange (16) for abutment with the rotary tool (2).

## Revendications

1. Système d'outil comprenant un logement d'outil (1) doté d'un mandrin (4), un outil rotatif (2) posé sur le logement d'outil (1) doté d'une perforation de logement (5) et une bague de centrage fermée (6 ; 8 ; 11 ; 17) installée entre le mandrin (4) et l'outil rotatif (2) et dotée d'un contour élastiquement déformable, dans lequel la bague de centrage (6 ; 8 ; 11 ; 17) est réalisée avec une section transversale circulaire et comporte au moins une zone de centrage extérieure (7 ; 9 ; 13) saillante de façon radiale vers l'extérieur et élastiquement mobile, **caractérisé en ce que** la zone de centrage extérieure (7 ; 9 ; 13) comporte un surdimensionnement mineur par rapport à la perforation de logement (5) et se déforme ainsi radialement vers l'intérieur de manière élastique lors de l'enfilage de l'outil rotatif.

2. Système d'outil selon la revendication 1, **caractérisé en ce que** la bague de centrage (6 ; 8 ; 11 ; 17) comporte au moins une zone de centrage intérieure (10 ; 12) saillante de façon radiale vers l'intérieur et élastiquement mobile.

3. Système d'outil selon la revendication 1 ou 2, **caractérisé en ce que** la bague de centrage (6 ; 8 ; 11 ; 17) contient des zones de centrage extérieures (9 ; 13) et des zones de centrage intérieures (10 ; 12) décalées dans la direction circonférentielle par rapport à celles-ci.

4. Système d'outil selon l'une des revendications 1 à 3, **caractérisé en ce que** la bague de centrage (6 ; 8 ; 11 ; 17) possède une épaisseur de paroi constante dans la mesure du possible.

5. Système d'outil selon l'une des revendications 1 à 4, **caractérisé en ce que** la bague de centrage (6) est réalisée de manière cylindrique et la zone de centrage extérieure est formée par un bourrelet annulaire (7) courbé radialement vers l'extérieur.

6. Système d'outil selon la revendication 1, **caractérisé en ce que** la bague de centrage (17) possède une paroi de section concave ou convexe.

7. Système d'outil selon la revendication 6, **caractérisé en ce que** la bague de centrage (17) comporte des rainures longitudinales réparties dans la direction circonférentielle.

8. Système d'outil selon l'une des revendications précédentes, **caractérisé en ce que** la bague de centrage (6 ; 8 ; 11 ; 17) comporte à une extrémité une collerette annulaire (16) pour l'appui contre l'outil rotatif (2).
